# EUROPEAN PATENT APPLICATION

(11) **EP 4 601 348 A1**
(43) Date of publication of application: **13.08.2025**
(21) Application number: 23854375.5
(22) Date of filing: 12.08.2023
(51) Int. Cl.: H04W 16/10, H04W 72/04

(54) **METHOD AND APPARATUS FOR WIRELESS COMMUNICATION**

(30) Priority: 18.08.2022 CN 202210990996
(71) Applicant: Apogee Networks, LLC, Dallas, TX 75201 (US)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2023/112781
(87) International publication number: WO 2024/037474

(57) **Abstract**

The present application discloses a method and apparatus for wireless communication. A node first receives a first information block set, the first information block set being used for configuring a first BWP, the first information block set comprising a BWP information unit, and the BWP information unit being used for determining a first SCS configuration; and then sends a first PUSCH; the first PUSCH depending on the first information block set, the first PUSCH depending on a target SCS configuration, the target SCS configuration candidates comprising the first SCS configuration and a second SCS configuration, and the second SCS configuration being different from the first SCS configuration. The present application is directed at a full-duplex system, improves an SCS configuration method and application method, and further ensures overall performance of the systems on the basis flexible use of spectrum resources while improving the overall performance of the system.

## Description

### Technical Field

The present invention relates to methods and apparatuses in wireless communication systems, in particular to transmission schemes and apparatuses for uplink scheduling in wireless communication systems.

### Background Art

In the 5G NR (New Radio Access Technology) system, in order to support a plurality of subcarrier spacing under a system bandwidth, and to consider the limitation to terminal reception bandwidth and other reasons, the 5G system introduces the concept of BWP (Bandwidth Part), that is, when a cell has a CC (Component Carrier) with a larger bandwidth, the base station can split the larger CC into a plurality of BWPs to adapt to UE (User Equipment) with a smaller reception bandwidth and transmission bandwidth capability. When the UE with a smaller bandwidth capability communicates with the cell, the UE only performs downlink reception or uplink transmission on one BWP; and in order to improve the configuration flexibility and realtime performance of BWP, the base station can adopt scheduling-included DCI (Downlink Control Information) to dynamically switch BWP. The terminal will be configured with at least one downlink BWP and one uplink BWP, and the transmission in the above-mentioned downlink BWP and uplink BWP must follow the corresponding downlink BWP and uplink BWP RRC (Radio Resource Control) configuration.

### Summary of the Invention

In the Release 18 system, SBFD (Subband non-overlapping Full Duplex) is proposed, that is, a communication device performs transmission and reception simultaneously on two subbands. In the SBFD scenario, the spectrum resources for uplink transmission and the spectrum resources for downlink transmission will become more flexible, and may appear on part of frequency domain resources of a downlink BWP for uplink transmission, or on part of frequency domain resources of an uplink BWP for downlink transmission. In the existing system, the SCS (Subcarrier Spacing) configuration of the BWP where the PUSCH (Physical Uplink Shared Channel) is located will affect the determination of relevant information in the PUSCH time domain, and other transmission-related configurations of the PUSCH will also refer to the RRC configuration corresponding to the BWP where the PUSCH is located. Considering the SBFD scenario, the above-mentioned existing transmission and corresponding configuration schemes need to be reconsidered.

In response to the scheduling problem in the SBFD scenario in the multi-carrier system of NR, the present application discloses a solution. It should be noted that in the description of the present application, SBFD is only used as a typical application scenario or example. This application is also applicable to other scenarios facing similar problems (such as other nondynamic full duplex scenarios, including but not limited to capacity enhancement systems, systems that adopt higher frequency, coverage enhancement systems, unlicensed band communication, IoT (Internet of Things), URLLC (Ultra-Reliable Low-Latency Communication) networks, Vehicle-to-Everything, etc.), where similar technical effects can also be achieved. In addition, adopting a unified solution in different scenarios (including but not limited to SBFD scenarios) can also help reduce hardware complexity and costs. In case of no conflict, the embodiments and features in the embodiments in the first node device of the present application may be applied to the second node device, and vice versa. In particular, the explanation of terminology, nouns, functions, and variables in the present application (if not specified) can refer to the definitions in the TS36 series, TS38 series, and TS37 series of the specification protocol of 3GPP. If required, refer to 3GPP standards TS38.211, TS38.212, TS38.213, TS38.214, TS38.215, TS38.321, TS38.331, TS38.305, TS37.355 to assist in the understanding of the present application.

The present application discloses a method for use in a first node for wireless communication, comprising:
receiving a first information block set, the first information block set being used for configuring a first BWP, the first information block set comprising a BWP information unit, the BWP information unit being used for determining a first SCS configuration; and
transmitting a first PUSCH,
wherein, the first PUSCH depends on the first information block set, the first PUSCH depends on a target SCS configuration, candidates of the target SCS configuration comprise the first SCS configuration and the second SCS configuration, and the second SCS configuration is different from the first SCS configuration.

As one embodiment, the above-mentioned method is characterized by: increasing configuration flexibility.

As one embodiment, the above-mentioned method is characterized by: avoiding frequent updates of RRC messages.

According to one aspect of the present application, it is characterized in that the meaning of the first PUSCH depending on the target SCS configuration comprises at least one of the following:
- the first PUSCH adopts subcarrier spacing to which the target SCS configuration corresponds;
- the target SCS configuration is used for determining time domain resources occupied by the first PUSCH;
- the target SCS configuration is used for determining time domain resources occupied by signals associated with information carried by the first PUSCH; and
- the target SCS configuration is used for determining the time at which the information carried by the first PUSCH takes effect.

As one embodiment, the above-mentioned method is characterized in that: determination of the target SCS configuration will affect transmission of the first PUSCH.

As one embodiment, the above-mentioned method is characterized by: ensuring compatibility with existing systems under the premise of introducing two SCS configurations.

According to one aspect of the present application, it is characterized in that the target SCS configuration is the first SCS configuration in the first SCS configuration and the second SCS configuration, the first SCS configuration being configurable.

According to one aspect of the present application, it is characterized in that the target SCS configuration is the first SCS configuration in the first SCS configuration and the second SCS configuration, the first SCS configuration being predefined in the first SCS configuration and the second SCS configuration.

According to one aspect of the present application, it is characterized in that a type of the first PUSCH is used for determining the target SCS configuration.

According to one aspect of the present application, it is characterized in that the type of the first PUSCH comprises at least one of the following:
- a type of BWP where the first PUSCH is located;
- whether the first PUSCH carries UCI (Uplink Control Information);
- a type of the UCI carried by the first PUSCH; and
- a scheduling method of the first PUSCH.

According to one aspect of the present application, it is characterized by comprising:
receiving first DCI,
wherein, the first DCI is used for scheduling the first PUSCH, the first DCI corresponds to a third SCS configuration, transmission of the first PUSCH depends on both the target SCS configuration and the third SCS configuration, and the third SCS configuration corresponds to subcarrier spacing adopted by the first DCI.

The present application discloses a method for use in a second node for wireless communication, comprising:
transmitting a first information block set, the first information block set being used for configuring a first BWP, the first information block set comprising a BWP information unit, the BWP information unit being used for determining a first SCS configuration; and
receiving a first PUSCH,
wherein, the first PUSCH depends on the first information block set, the first PUSCH depends on a target SCS configuration, candidates of the target SCS configuration comprise the first SCS configuration and the second SCS configuration, and the second SCS configuration is different from the first SCS configuration.

According to one aspect of the present application, it is characterized in that the meaning of the first PUSCH depending on the target SCS configuration comprises at least one of the following:
- the first PUSCH adopts subcarrier spacing to which the target SCS configuration corresponds;
- the target SCS configuration is used for determining time domain resources occupied by the first PUSCH;
- the target SCS configuration is used for determining time domain resources occupied by signals associated with information carried by the first PUSCH; and
- the target SCS configuration is used for determining the time at which the information carried by the first PUSCH takes effect.

According to one aspect of the present application, it is characterized in that the target SCS configuration is the first SCS configuration in the first SCS configuration and the second SCS configuration, the first SCS configuration being configurable.

According to one aspect of the present application, it is characterized in that the target SCS configuration is the first SCS configuration in the first SCS configuration and the second SCS configuration, the first SCS configuration being predefined in the first SCS configuration and the second SCS configuration.

According to one aspect of the present application, it is characterized in that a type of the first PUSCH is used for determining the target SCS configuration.

According to one aspect of the present application, it is characterized in that the type of the first PUSCH comprises at least one of the following:
- a type of BWP where the first PUSCH is located;
- whether the first PUSCH carries UCI;
- a type of the UCI carried by the first PUSCH; and
- a scheduling method of the first PUSCH.

According to one aspect of the present application, it is characterized by comprising:
transmitting first DCI,
wherein, the first DCI is used for scheduling the first PUSCH, the first DCI corresponds to a third SCS configuration, transmission of the first PUSCH depends on both the target SCS configuration and the third SCS configuration, and the third SCS configuration corresponds to subcarrier spacing adopted by the first DCI.

The present application discloses a first node for wireless communication, comprising:
a first receiver for receiving a first information block set, the first information block set being used for configuring a first BWP, the first information block set comprising a BWP information unit, the BWP information unit being used for determining a first SCS configuration; and
a first transmitter for transmitting a first PUSCH,
wherein, the first PUSCH depends on the first information block set, the first PUSCH depends on a target SCS configuration, candidates of the target SCS configuration comprise the first SCS configuration and the second SCS configuration, and the second SCS configuration is different from the first SCS configuration.

The present application discloses a second node for wireless communication, comprising:
a second transmitter for transmitting a first information block set, the first information block set being used for configuring a first BWP, the first information block set comprising a BWP information unit, the BWP information unit being used for determining a first SCS configuration; and
a second receiver for receiving the first PUSCH,
wherein, the first PUSCH depends on the first information block set, the first PUSCH depends on a target SCS configuration, candidates of the target SCS configuration comprise the first SCS configuration and the second SCS configuration, and the second SCS configuration is different from the first SCS configuration.

As one embodiment, the advantage of the solution in the present application is that while ensuring scheduling flexibility, interference between uplink and downlink is reduced.

As one embodiment, the advantage of the solution in the present application is that the system efficiency is improved and the RRC signaling overhead is reduced.

### Brief Description of the Drawings

Other features, objects and advantages of the present application will become more apparent by reading the detailed description of non-limiting embodiments with reference to the following drawings:
FIG. 1 shows a processing flowchart of a first node according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a flowchart of transmission between a first node and a second node according to one embodiment of the present application;
FIG. 6 shows a transmission flowchart of first DCI according to one embodiment of the present application;
FIG. 7 shows a schematic diagram of a first SCS configuration according to one embodiment of the present application;
FIG. 8 shows a schematic diagram of the relationship between the first PUSCH and the target SCS according to one embodiment of the present application;
FIG. 9 shows a schematic diagram of the relationship between the first PUSCH and the target SCS according to another embodiment of the present application;
FIG. 10 shows a schematic diagram of the relationship between the first PUSCH and the target SCS according to another embodiment of the present application;
FIG. 11 shows a structural block diagram of a processing apparatus for a first node according to one embodiment of the present invention; and
FIG. 12 shows a structural block diagram of a processing apparatus for a second node according to one embodiment of the present invention.

### Detailed Description of Embodiments

The technical solution of the present application will be further described in detail below in conjunction with the accompanying drawings. It should be noted that the embodiments and features in the embodiments in the present application can be arbitrarily combined with each other in case of no conflict.

### Embodiment 1

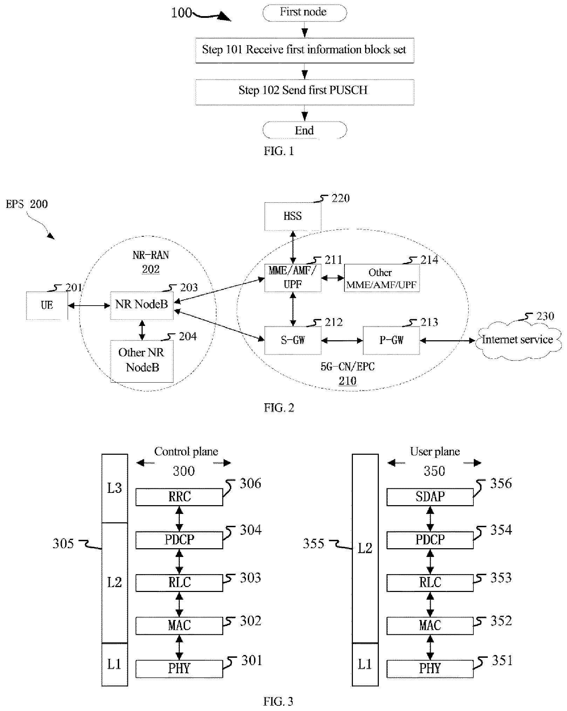

Embodiment 1 illustrates a processing flowchart of a first node, as shown in FIG. 1. In 100 shown in FIG. 1, each block represents one step. In Embodiment 1, the first node in the present application receives a first information block set in step 101; and transmits a first PUSCH in step 102.

In Embodiment 1, the first information block set is used for configuring a first BWP, the first information block set comprises a BWP information unit, and the BWP information unit is used for determining a first SCS configuration; and the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

As one embodiment, an information block in the present application corresponds to one IE (Information Element) in TS 38.331.

As one embodiment, an information block in the present application corresponds to one field in one IE (Information Element) in TS 38.331.

As one embodiment, an information block in the present application corresponds to one IE corresponding to one field in an IE (Information Element) in TS 38.331.

As one embodiment, the first information block set comprises RRC signaling.

As one embodiment, the first information block set comprises a plurality of RRC signaling.

As one embodiment, the first information block set comprises one IE in TS 38.331.

As one embodiment, the first information block set comprises a plurality of IEs in TS 38.331.

As one embodiment, the first information block set comprises part of information blocks included in one IE in TS 38.331.

As one embodiment, the first information block set comprises BWP-Downlink IE.

As one embodiment, the first information block set comprises BWP-DownlinkCommon IE.

As one embodiment, the first information block set comprises BWP-DownlinkDedicated IE.

As one embodiment, the first information block set comprises BWP-Uplink IE.

As one embodiment, the first information block set comprises BWP-UplinkCommon IE.

As one embodiment, the first information block set comprises BWP-UplinkDedicated IE.

As one embodiment, the first information block set comprises BWP IE.

As one embodiment, the BWP information unit comprises BWP IE.

As one embodiment, the BWP information unit comprises a subcarrierSpacing field in BWP IE.

As one embodiment, the BWP information unit corresponds to one Uplink BWP.

As one embodiment, the first SCS configuration is equal to one of 0, 1, 2, 3, 4.

As one embodiment, the first SCS configuration is equal to a non-negative integer.

As one embodiment, the second SCS configuration is equal to one of 0, 1, 2, 3, 4.

As one embodiment, the second SCS configuration is equal to a non-negative integer.

As one embodiment, the meaning of the above phrase "the BWP information unit is used for determining a first SCS configuration" comprises: a value of the first SCS configuration is related to subcarrier spacing indicated by the BWP information unit.

As one embodiment, the meaning of the above phrase "the BWP information unit is used for determining a first SCS configuration" comprises: subcarrier spacing indicated by the BWP information unit is used for determining a value of the first SCS configuration.

As one sub-embodiment of the above two embodiments, the sub-carrier interval indicated by the BWP information unit is equal to 15 KHz and the first SCS configuration is equal to 0.

As one sub-embodiment of the above two embodiments, the sub-carrier interval indicated by the BWP information unit is equal to 30KHz and the first SCS configuration is equal to 1.

As one sub-embodiment of the above two embodiments, the sub-carrier interval indicated by the BWP information unit is equal to 60KHz and the first SCS configuration is equal to 2.

As one sub-embodiment of the above two embodiments, the sub-carrier interval indicated by the BWP information unit is equal to 120KHz and the first SCS configuration is equal to 3.

As one sub-embodiment of the above two embodiments, the sub-carrier interval indicated by the BWP information unit is equal to 240KHz and the first SCS configuration is equal to 4.

As one embodiment, the meaning of the above phrase "the first information block set is used for configuring a first BWP" comprises: the first information block set comprises BWP-UplinkDedicated IE, the BWP-UplinkDedicated IE being for the first BWP.

As one embodiment, the meaning of the above phrase "the first information block set is used for configuring a first BWP" comprises: the first information block set comprises BWP-Uplink IE, and a bwp-id included in the BWP-Uplink IE is a bwp-id adopted by the first BWP.

As one embodiment, the meaning of the above phrase "the first information block set is used for configuring a first BWP" comprises: the first information block set comprises PUSCH-Config IE, and PUSCH transmitted in the first BWP depends on the PUSCH-Config IE.

As one embodiment, the first BWP is one Uplink BWP.

As one embodiment, the first PUSCH is transmitted in the first BWP.

As one embodiment, the first PUSCH is transmitted in a BWP other than the first BWP.

As one embodiment, whether the first PUSCH is transmitted in the first BWP is used for determining the target SCS configuration.

As one embodiment, the first PUSCH is generated by one bit block.

As one embodiment, the first PUSCH is generated by one TB (Transport Block).

As one embodiment, the first PUSCH is generated by a plurality of TBs.

As one embodiment, the first PUSCH is generated by one CBG (Code Block Group).

As one embodiment, the meaning of the above phrase "the first PUSCH depends on the first information block set" comprises: transmission of the first PUSCH depends on the first information block set.

As one embodiment, the meaning of the above phrase "the first PUSCH depends on the first information block set" comprises: transmission of the first PUSCH depends on configuration information included in the first information block set.

As one embodiment, the meaning of the above phrase "the first PUSCH depends on the first information block set" comprises: the first PUSCH depends on PUSCH-Config IE included in the first information block set.

As one sub-embodiment of this embodiment, the scrambling of the first PUSCH depends on dataScramblingIdentityPUSCH in the PUSCH-Config IE.

As one sub-embodiment of this embodiment, whether the first PUSCH is a codebook transmission depends on txConfig in the PUSCH-Config IE.

As one sub-embodiment of this embodiment, a transmit power value of the first PUSCH depends on pusch-PowerControl in the PUSCH-Config IE.

As one sub-embodiment of this embodiment, a frequency domain frequency hopping of the first PUSCH depends on frequencyHopping in the PUSCH-Config IE.

As one sub-embodiment of this embodiment, a frequency domain frequency hopping of the first PUSCH depends on frequencyHoppingOffsetLists in the PUSCH-Config IE.

As one sub-embodiment of this embodiment, a resource assignment of the first PUSCH depends on resourceAllocation in the PUSCH-Config IE.

As one sub-embodiment of this embodiment, time domain resources occupied by the first PUSCH depend on pusch-TimeDomainAllocationList in the PUSCH-Config IE.

As one sub-embodiment of this embodiment, the number of repetitions adopted by the first PUSCH depends on pusch-AggregationFactor in the PUSCH-Config IE.

As one sub-embodiment of this embodiment, an MCS table adopted by the first PUSCH depends on mcs-Table in the PUSCH-Config IE.

As one sub-embodiment of this embodiment, an MCS table adopted by the first PUSCH depends on mcs-TableTransformPrecoder in the PUSCH-Config IE.

As one sub-embodiment of this embodiment, whether the first PUSCH adopts transformPrecoder depends on transformPrecoder in the PUSCH-Config IE.

As one sub-embodiment of this embodiment, an RBG (Resource Block Group) size adopted by the first PUSCH depends on rbg-Size in the PUSCH-Config IE.

As one embodiment, the meaning of the above phrase "the first PUSCH depends on the first information block set" comprises: the first PUSCH depends on configuredGrantConfig IE included in the first information block set.

As one sub-embodiment of this embodiment, a frequency domain frequency hopping of the first PUSCH depends on frequencyHopping in the configuredGrantConfig IE.

As one sub-embodiment of this embodiment, a DMRS configuration included in the first PUSCH depends on cg-DMRS-Configuration in the configuredGrantConfig IE.

As one sub-embodiment of this embodiment, an MCS table adopted by the first PUSCH depends on mcs-Table in the configuredGrantConfig IE.

As one sub-embodiment of this embodiment, an MCS table adopted by the first PUSCH depends on mcs-TableTransformPrecoder in the configuredGrantConfig IE.

As one sub-embodiment of this embodiment, a resource assignment of the first PUSCH depends on resourceAllocation in the configuredGrantConfig IE.

As one sub-embodiment of this embodiment, an RBG size adopted by the first PUSCH depends on rbg-Size in the configuredGrantConfig IE.

As one sub-embodiment of this embodiment, a transmission power value of the first PUSCH depends on powerControlLoopToUse in the configuredGrantConfig IE.

As one sub-embodiment of this embodiment, a transmission power value of the first PUSCH depends on p0-PUSCH-Alpha in the configuredGrantConfig IE.

As one sub-embodiment of this embodiment, whether the first PUSCH adopts transformPrecoder depends on transformPrecoder in the configuredGrantConfig IE.

As one sub-embodiment of this embodiment, a HARQ process number used by the first PUSCH depends on nrofHARQ-Processes in the configuredGrantConfig IE.

As one sub-embodiment of this embodiment, the number of repetitions adopted by the first PUSCH depends on repK in the configuredGrantConfig IE.

As one sub-embodiment of this embodiment, time domain resources occupied by the first PUSCH depends on periodicity in the configuredGrantConfig IE.

As one sub-embodiment of this embodiment, time domain resources occupied by the first PUSCH depends on configuredGrantTimer in the configuredGrantConfig IE.

### Embodiment 2

Embodiment 2 illustrates a schematic diagram of a network architecture, as shown in FIG. 2.

Embodiment 2 illustrates a schematic diagram of a network architecture according to one embodiment of the present application, as shown in FIG. 2. FIG. 2 illustrates a V2X communication architecture under a 5G NR (NewRadio), LTE (Long-Term Evolution) and LTE-A (Long-Term Evolution Advanced) system architecture. The 5G NR or LTE network architecture may be referred to as 5GS (5GSystem)/EPS (Evolved Packet System) or some other suitable terms.

The V2X communication architecture of Embodiment 2 comprises UE (User Equipment) 201, UE241, NG-RAN (Next Generation Wireless Access Network) 202, 5GC (5G Core Network)/EPC (Evolved Packet Core) 210, HSS (Home Subscriber Server)/UDM (Unified Data Management) 220, ProSe function 250, and ProSe application server 230. The V2X communication architecture may be interconnected with other access networks, but these entities/interfaces are not shown for simplicity. As shown, the V2X communication architecture provides packet switching services, however those skilled in the art will readily understand that various concepts presented throughout the present application can be extended to networks or other cellular networks that provide circuit switching services. The NG-RAN comprises NR Node B (gNB) 203 and other gNB204. The gNB203 provides user and control plane protocol termination toward the UE201. The gNB203 may be connected to the other gNB204 via an Xn interface (for example, backhaul). The gNB203 may also be referred to as a base station, a base transceiver station, a radio base station, a radio transceiver, a transceiver function, a basic service set (BSS), an extended service set (ESS), a TRP (transmitting and receiving node), or some other suitable terms. The gNB203 provides the UE201 with access points to 5GC/EPC210. Examples of UE201 include cellular telephones, smart phones, Session Initiation Protocol (SIP) telephones, laptops, personal digital assistants (PDAs), satellite radios, non-terrestrial base station communications, satellite mobile communications, global positioning systems, multimedia apparatuses, video apparatuses, digital audio players (for example, MP3 players), cameras, game consoles, drones, aircrafts, narrowband Internet of Things devices, machine type communication devices, land transportation vehicles, automobiles, wearable devices, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the 5GC/EPC210 via an S1/NG interface. The 5GC/EPC210 includes: MME (Mobility Management Entity)/AMF (Authentication Management Field)/SMF (Session Management Function) 211, other MME/AMF/SMF214, S-GW (Serving Gateway)/UPF (User Plane Function) 212, and P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet services 230. The Internet services 230 comprise an operator's corresponding Internet protocol service, which may specifically include the Internet, intranets, IMS (IP Multimedia Subsystem), and packet switching streaming services. The ProSe function 250 is a logical function for network-related behaviors required for ProSe (Proximitybased Service); and includes the DPF (Direct Provisioning Function), Direct Discovery Name Management Function, EPC-level Discovery ProSe Function, etc. The ProSe application server 230 has functions such as storing EPC ProSe user ID, mapping between an application layer user ID and the EPC ProSe user ID, and assigning ProSe-limited code suffix pools.

As one embodiment, the UE201 corresponds to the first node in the present application, and the gNB203 corresponds to the second node in the present application.

As one embodiment, the UE201 supports Massive-MIMO (Massive-Multiple Input Multiple Output).

As one embodiment, the UE201 supports subband full duplex.

As one embodiment, the UE201 supports the receiving and transmitting of a plurality of beamforming signals on a time-frequency resource simultaneously.

As one embodiment, the UE201 supports both receiving and transmitting of wireless signals on a time domain resource simultaneously.

As one embodiment, the UE201 supports scheduling by a plurality of serving cells simultaneously.

As one embodiment, the UE201 supports scheduling by a plurality of TRPs (transmitting and receiving points) simultaneously.

As one embodiment, the UE201 supports one BWP being configured with a plurality of SCSs.

As one embodiment, the NR Node B corresponds to the second node in the present application.

As one embodiment, the NR Node B supports Massive-MIMO.

As one embodiment, the NR Node B supports subband full duplex.

As one embodiment, the NR Node B supports the receiving of a plurality of beamforming signals on a time-frequency resource simultaneously.

As one embodiment, the NR Node B supports the transmitting of a plurality of beamforming signals on a time-frequency resource simultaneously.

As one embodiment, the NR Node B supports both receiving and transmitting of wireless signals on a time domain resource simultaneously.

As one embodiment, the NR Node B supports both receiving and transmitting of wireless signals on a time-frequency resource simultaneously.

As one embodiment, the NR Node B supports scheduling by a plurality of serving cells simultaneously.

As one embodiment, the NR Node B supports scheduling by a plurality of TRPs (transmitting and receiving points) simultaneously.

As one embodiment, the NR Node B supports one BWP being configured with a plurality of SCSs.

As one embodiment, the NR Node B is a base station.

As one embodiment, the NR Node B is a cell.

As one embodiment, the NR Node B comprises a plurality of cells.

As one embodiment, the NR Node B is used for determining transmissions on a plurality of serving cells.

As one embodiment, the first node in the present application corresponds to the UE201, and the second node in the present application corresponds to the NR Node B.

As one embodiment, the first node and the second node in the present application are the UE201 and the gNB203, respectively.

As one embodiment, the first node in the present application is the UE201, and the second node in the present application is the UE241.

### Embodiment 3

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300. FIG. 3 shows a radio protocol architecture for the control plane 300 between a first communication node device (UE, gNB or RSU in V2X) and a second communication node device (gNB, UE or RSU in V2X) using three layers: Layer 1, Layer 2, and Layer 3. Layer 1 (L1 layer) is the lowest layer and implements various PHY (physical layer) signal processing functions. The L1 layer will be referred to herein as PHY301. Layer 2 (L2 layer) 305 is above the PHY301 and is responsible for links between the first communication node device and the second communication node device through PHY301. The L2 layer 305 comprises a MAC (Medium Access Control) sub-layer 302, an RLC (Radio Link Control) sub-layer 303, and a PDCP (Packet Data Convergence Protocol) sub-layer 304, which terminate at the second communication node device. The PDCP sub-layer 304 provides multiplexing between different radio bearers and logical channels. The PDCP sub-layer 304 also provides security through packet data encryption, and the PDCP sub-layer 304 also provides handover support between the first communication node device and the second communication node device. The RLC sublayer 303 provides segmentation and reassembly of upper layer data packets, retransmission of lost data packets, and reordering of data packets to compensate for disordered reception caused by HARQ. The MAC sub-layer 302 provides multiplexing between logical channels and transport channels. The MAC sub-layer 302 is also responsible for assigning various radio resources (for example, resource blocks) in a cell among the first communication node devices. The MAC sublayer 302 is also responsible for HARQ operations. The RRC (Radio Resource Control) sub-layer 306 in Layer 3 (L3 layer) in the control plane 300 is responsible for obtaining radio resources (that is, radio bearers) and configuring the lower layer using RRC signaling between the second communication node device and the first communication node device. The radio protocol architecture of the user plane 350 includes Layer 1 (L1 layer) and Layer 2 (L2 layer). Regarding the radio protocol architecture used between the first communication node device and the second communication node device in the user plane 350, the physical layer 351, a PDCP sublayer 354 in the L2 layer 355, an RLC sublayer 353 in the L2 layer 355 and a MAC sublayer 352 in the L2 layer 355 are generally the same as the corresponding layers and sublayers in the control plane 300, but the PDCP sublayer 354 also provides header compression for upper layer data packets to reduce radio transmission overhead. The L2 layer 355 in the user plane 350 also comprises an SDAP (Service Data Adaptation Protocol) sub-layer 356, and the SDAP sub-layer 356 is responsible for mapping between QoS streams and data radio bearers (DRBs) to support service diversity. Although not shown, the first communication node device may have several upper layers above the L2 layer 355, including a network layer (for example, IP layer) terminated at P-GW on the network side and an application layer terminated at the other end of the connection (for example, a remote UE, server, etc.).

As one embodiment, the wireless protocol architecture in FIG. 3 is applicable to the first node in the present application.

As one embodiment, the wireless protocol architecture in FIG. 3 is applicable to the second node in the present application.

As one embodiment, the PDCP304 of the second communication node device is used for generating scheduling of the first communication node device.

As one embodiment, the PDCP354 of the second communication node device is used for generating scheduling of the first communication node device.

As one embodiment, the first information block set is generated in the RRC306.

As one embodiment, the first PUSCH is generated in the PHY301 or the PHY351.

As one embodiment, the first PUSCH is generated in the MAC302 or the MAC352.

As one embodiment, the first PUSCH is generated in the RRC306.

As one embodiment, the first DCI is generated in the PHY301 or the PHY351.

As one embodiment, the first node is a terminal.

As one embodiment, the first node is a relay.

As one embodiment, the second node is a terminal.

As one embodiment, the second node is a relay.

As one embodiment, the second node is a base station.

As one embodiment, the second node is a gNB.

As one embodiment, the second node is a TRP (Transmitter Receiver Point).

As one embodiment, the second node is used for managing a plurality of TRPs.

As one embodiment, the second node is a node for managing a plurality of cells.

As one embodiment, the second node is a node for managing a plurality of serving cells.

### Embodiment 4

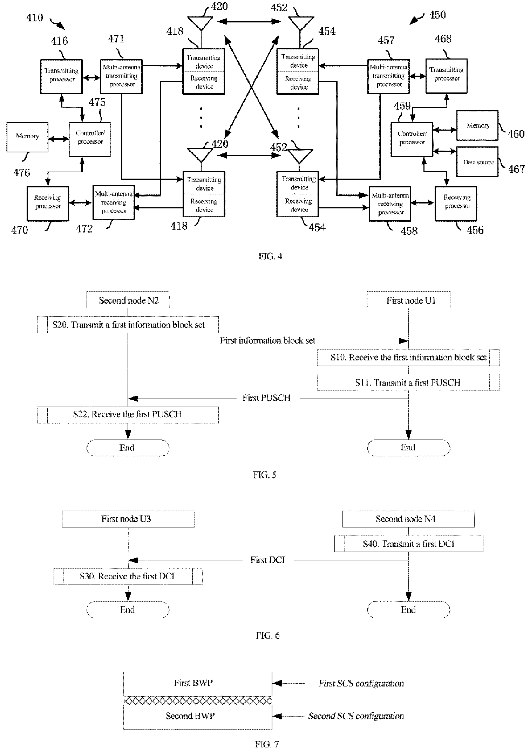

Embodiment 4 shows a schematic diagram of a first communication device and a second communication device according to the present application, as shown in FIG. 4. FIG. 4 is a block diagram of the first communication device 450 and the second communication device 410 that communicate with each other in the access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper layer data packets from the core network are provided to the controller/processor 475. The controller/processor 475 implements the functionality of the L2 layer. In transmission from the second communication device 410 to the first communication device 450, the controller/processor 475 provides header compression, encryption, packet segmentation and reordering, multiplexing between logical channels and transport channels, and radio resource assignment of the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for the L1 layer (that is, the physical layer). The transmitting processor 416 implements encoding and interleaving to facilitate forward error correction (FEC) at the second communication device 410, and mapping of signal clusters based on various modulation schemes (for example, Binary Phase Shift Keying (BPSK), Quadrature Phase Shift Keying (QPSK), M-Phase Shift Keying (M-PSK), M-Quadrature Amplitude Modulation (M-QAM)). The multi-antenna transmitting processor 471 performs digital spatial precoding of the encoded and modulated symbols, including codebook-based precoding and non-codebook-based precoding, and beamforming processing, to generate one or more spatial streams. The transmitting processor 416 then maps each spatial stream to a subcarrier, multiplexes with a reference signal (for example, pilot) in the time domain and/or frequency domain, and then uses Inverse Fast Fourier Transform (IFFT) to generate a physical channel carrying a time domain multi-carrier symbol stream. The multi-antenna transmitting processor 471 then performs transmit analog precoding/beamforming operations on the time domain multi-carrier symbol stream. Each transmitting device 418 converts the baseband multi-carrier symbol stream provided by the multi-antenna transmitting processor 471 into a radio frequency stream, and then provides it to different antennas 420.

In transmission from the second communication device 410 to the first communication device 450, at the first communication device 450, each receiving device 454 receives a signal through its corresponding antenna 452. Each receiving device 454 recovers information modulated to the radio frequency carrier and converts the radio frequency stream into a baseband multi-carrier symbol stream to provide it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses Fast Fourier Transform (FFT) to convert the baseband multi-carrier symbol stream from the time domain to the frequency domain after the receiving analog precoding/beamforming operations. In the frequency domain, the physical layer data signals and the reference signals are demultiplexed by the receiving processor 456, where the reference signals are used for channel estimation, and the data signals undergo multi-antenna detection in the multi-antenna receiving processor 458 to recover any spatial stream destined for the first communication device 450. Symbols on each spatial stream are demodulated and recovered in the receiving processor 456 and generate soft decisions. The receiving processor 456 then decodes and deinterleaves the soft decisions to recover upper layer data and control signals transmitted by the second communication device 410 on the physical channel. The upper layer data and control signals are then provided to the controller/processor 459. The controller/processor 459 implements the functions of the L2 layer. The controller/processor 459 may be associated with a memory 460 storing program codes and data. The memory 460 may be referred to as a computer-readable medium. In transmission from the second communication device 410 to the second communication device 450, the controller/processor 459 provides demultiplexing between transport channels and logical channels, packet reassembly, decryption, header decompression, and control signal processing to recover upper layer data packets from the core network. The upper layer data packets are then provided to all protocol layers above the L2 layer. Various control signals may also be provided to L3 for L3 processing.

In transmission from the first communication device 450 to the second communication device 410, at the first communication device 450, the data source 467 is used for providing upper layer data packets to the controller/processor 459. The data source 467 represents all protocol layers above the L2 layer. Similar to the transmission function at the second communication device 410 as described for the transmission from the second communication device 410 to the first communication device 450, the controller/processor 459 implements header compression, encryption, packet segmentation and reordering, and multiplexing between logical channels and transport channels based on wireless resource assignment, thereby implementing L2 layer functions for the user plane and the control plane. The controller/processor 459 is also responsible for retransmission of lost packets and signaling to the second communication device 410. The transmitting processor 468 performs modulation mapping and channel encoding processing, and the multi-antenna transmitting processor 457 performs digital multi-antenna spatial precoding, including codebook-based precoding and non-codebook-based precoding, and beamforming processing. The transmitting processor 468 modulates the resulting spatial streams into multi-carrier/single-carrier symbol streams. These streams undergo analog precoding/beamforming operations in the multi-antenna transmitting processor 457 before being provided to different antennas 452 via the transmitting device 454. Each transmitting device 454 first converts baseband symbol streams provided from the multi-antenna transmitting processor 457 into radio frequency symbol streams, and then provides the radio frequency symbol streams to the antenna 452.

In transmission from the first communication device 450 to the second communication device 410, the function at the second communication device 410 is similar to the reception function at the first communication device 450 as described for the transmission from the second communication device 410 to the first communication device 450. Each receiving device 418 receives the radio frequency signals through its corresponding antenna 420, converts the received radio frequency signals into baseband signals, and provides the baseband signals to the multi-antenna receiving processor 472 and the receiving processor 470. The receiving processor 470 and the multi-antenna receiving processor 472 jointly implement the function of L1. The controller/processor 475 implements the functions of the L2 layer. The controller/processor 475 may be associated with a memory 476 storing program codes and data. The memory 476 may be referred to as a computer-readable medium. In transmission from the first communication device 450 to the second communication device 410, the controller/processor 475 provides demultiplexing between transport channels and logical channels, packet reassembly, decryption, header decompression, and control signal processing to recover upper layer data packets from the UE450. The upper layer data packets from the controller/processor 475 may be provided to the core network.

As one embodiment, the first communication device 450 comprises: at least one processor and at least one memory, the at least one memory comprising computer program codes, wherein the at least one memory and the computer program codes are configured to be used together with the at least one processor, and the first communication device 450 at least: first, receives a first information block set, the first information block set being used for configuring a first BWP, the first information block set comprising a BWP information unit, the BWP information unit being used for determining a first SCS configuration, and then transmits a first PUSCH, wherein the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

As one embodiment, the first communication device 450 comprises: a memory storing a computer-readable instruction program that generates an action when executed by at least one processor, wherein the action comprises: first, receiving a first information block set, the first information block set being used for configuring a first BWP, the first information block set comprising a BWP information unit, the BWP information unit being used for determining a first SCS configuration, and then transmitting a first PUSCH, wherein the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

As one embodiment, the second communication device 410 apparatus comprises: at least one processor and at least one memory, the at least one memory comprising computer program codes, wherein The at least one memory and the computer program codes are configured to be used together with the at least one processor. The second communication device 410 apparatus at least: first, transmits a first information block set, the first information block set being used for configuring a first BWP, the first information block set comprising a BWP information unit, the BWP information unit being used for determining a first SCS configuration, and then receives a first PUSCH, wherein the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

As one embodiment, the second communication device 410 apparatus comprises: a memory storing a computer-readable instruction program that generates an action when executed by at least one processor, wherein the action comprises: first, transmitting a first information block set, the first information block set being used for configuring a first BWP, the first information block set comprising a BWP information unit, the BWP information unit being used for determining a first SCS configuration; and then receiving the first PUSCH, the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

As one embodiment, the first communication device 450 corresponds to the first node in the present application.

As one embodiment, the second communication device 410 corresponds to the second node in the present application.

As one embodiment, the first communication device 450 is UE.

As one embodiment, the first communication device 450 is a terminal.

As one embodiment, the first communication device 450 is a relay.

As one embodiment, the first communication device 450 is a terminal with SBFD capabilities.

As one embodiment, the second communication device 410 is a base station.

As one embodiment, the second communication device 410 is a relay.

As one embodiment, the second communication device 410 is a network device.

As one embodiment, the second communication device 410 is a serving cell.

As one embodiment, the second communication device 410 is a TRP.

As one embodiment, the second communication device 410 is a base station with SBFD capabilities.

As one embodiment, at least the first four of the antenna 452, the receiving device 454, the multi-antenna receiving processor 458, the receiving processor 456, and the controller/processor 459 are used for receiving a first information block set; and the antenna 420, at least the first four of the transmitting device 418, the multi-antenna transmitting processor 471, the transmitting processor 416, and the controller/processor 475 are used for transmitting a first information block set.

As one implementation, at least the first four of the antenna 452, the transmitting device 454, the multi-antenna transmitting processor 457, the transmitting processor 468, and the controller/processor 459 are used for transmitting a first PUSCH; and at least the first four of the antenna 420, the receiving device 418, the multi-antenna receiving processor 472, the receiving processor 470, and the controller/processor 475 are used for receiving a first PUSCH.

As one embodiment, at least the first four of the antenna 452, the receiving device 454, the multi-antenna receiving processor 458, the receiving processor 456, and the controller/processor 459 are used for receiving first DCI; and at least the first four of the antenna 420, the transmitting device 418, the multi-antenna transmitting processor 471, the transmitting processor 416, and the controller/processor 475 are used for transmitting first DCI.

### Embodiment 5

Embodiment 5 illustrates a flowchart of transmission between a first node and a second node of one embodiment, as shown in FIG. 5. In FIG. 5, communication is performed between the first node U1 and the second node N2 through a wireless link. It is particularly noted that the order in the present embodiment does not limit the order of signal transmission and the order of implementation in the present application. In case of no conflict, the embodiments, sub-embodiments and dependent embodiments in Embodiment 5 can be applied to the embodiments, sub-embodiments and dependent embodiments in Embodiment 6 in the present application; On the contrary, independent embodiment case of no conflict, the embodiments, sub-embodiments and s in Embodiment 6 in the present application can be applied to Embodiment 5.

For **the first node U1,** in step S10, a first information block set is received; and in step S11, a first PUSCH is transmitted.

For **the second node N2,** in step S20, a first information block set is transmitted; and in step S21, a first PUSCH is received.

In Embodiment 5, the first information block set is used for configuring a first BWP, the first information block set comprises a BWP information unit, and the BWP information unit is used for determining a first SCS configuration; and the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

Typically, the meaning of the first PUSCH depending on the target SCS configuration comprises at least one of the following:
- the first PUSCH adopts the subcarrier spacing to which the target SCS configuration corresponds;
- the target SCS configuration is used for determining time domain resources occupied by the first PUSCH;
- the target SCS configuration is used for determining time domain resources occupied by signals associated with information carried by the first PUSCH; and
- the target SCS configuration is used for determining the time at which the information carried by the first PUSCH takes effect.

As one embodiment, the meaning of the first PUSCH depending on the target SCS configuration comprises: the first PUSCH adopts the subcarrier spacing to which the target SCS configuration corresponds.

As one embodiment, the meaning of the first PUSCH depending on the target SCS configuration comprises: the target SCS configuration is used for determining time domain resources occupied by the first PUSCH.

As one sub-embodiment of this embodiment, scheduling signaling of the first PUSCH indicates K2, and the K2 and the target SCS configuration are collectively used for determining a time slot in which the first PUSCH is located.

As one sub-embodiment of this embodiment, the target SCS configuration is used for determining a time slot difference between a time slot in which scheduling signaling of the first PUSCH is located and a time slot in which the first PUSCH is located.

As one embodiment, the meaning of the first PUSCH depending on the target SCS configuration comprises: the target SCS configuration is used for determining time domain resources occupied by signals associated with information carried by the first PUSCH.

As one sub-embodiment of this embodiment, the first PUSCH carries HARQ (Hybrid Automatic Repeat ReQuest) feedback associated with target signals, and the target SCS configuration is used for determining a time slot in which the target signal is located.

As one sub-embodiment of this embodiment, the first PUSCH carries HARQ feedback associated with target signals, and the target SCS configuration is used for determining a time slot difference between a time slot in which the target signal is located and a time slot in which the first PUSCH is located.

As one dependent embodiment of the above two sub-embodiments, physical layer channels occupied by the target signal comprise a PDSCH.

As one dependent embodiment of the above two sub-embodiments, transport channels corresponding to the target signal comprise DL-SCH.

As one sub-embodiment of this embodiment, the first PUSCH carries CSI (Channel State Information) triggered by target signaling, and the target SCS configuration is used for determining a time slot in which the target signaling is located.

As one dependent embodiment of this sub-embodiment, the target signaling comprises PDCCH (Physical Downlink Control Channel).

As one dependent embodiment of the sub-embodiment, the target signaling comprises DCI.

As one sub-embodiment of this embodiment, the first PUSCH carries CSI obtained from measurements of target reference signals, and the target SCS configuration is used for determining a time slot in which the target reference signal is located.

As one dependent embodiment of the sub-embodiment, the target reference signal comprises a CSI-RS (Channel State Information Reference Signal).

As one embodiment, the meaning of the first PUSCH depending on the target SCS configuration comprises: the target SCS configuration is used for determining the time at which information carried by the first PUSCH takes effect.

As one sub-embodiment of this embodiment, the first PUSCH is used for determining the first TCI (Transmission Configuration Indication), the first TCI takes effect in a first time slot, the target SCS configuration is used for determining a target time slot, and the first time slot is not earlier than the target time slot.

As one dependent embodiment of the sub-embodiment, the target SCS configuration is used for determining a time slot difference between a time slot in which the first PUSCH is located and the target time slot.

As one dependent embodiment of the sub-embodiment, the first TCI is used for the reception of PDCCH after the first time slot.

As one dependent embodiment of the sub-embodiment, the first TCI is used for the transmission of PUSCH after the first time slot.

Typically, the target SCS configuration is the first SCS configuration in the first SCS configuration and the second SCS configuration, the first SCS configuration being configurable.

As one embodiment, the meaning of the above phrase "the first SCS configuration is configurable" comprises: the first SCS configuration is configured by RRC signaling.

As one embodiment, the meaning of the above phrase "the first SCS configuration is configurable" comprises: the first SCS configuration is configured by higher-level signaling.

As one embodiment, the meaning of the above phrase "the first SCS configuration is configurable" comprises: the first SCS configuration is configured by system messages.

As one embodiment, the meaning of the above phrase "the first SCS configuration is configurable" comprises: the first SCS configuration is configured by a MAC (Medium Access Control) CE (Control Element).

Typically, the target SCS configuration is the first SCS configuration in the first SCS configuration and the second SCS configuration, the first SCS configuration being predefined in the first SCS configuration and the second SCS configuration.

As one embodiment, the meaning of the above phrase "the first SCS configuration is predefined in the first SCS configuration and the second SCS configuration" comprises: the first SCS configuration is a smaller value in the first SCS configuration and the second SCS configuration.

As one embodiment, the meaning of the above phrase "the first SCS configuration is predefined in the first SCS configuration and the second SCS configuration" comprises: the first SCS configuration is a larger value in the first SCS configuration and the second SCS configuration.

As one embodiment, the meaning of the above phrase "the first SCS configuration is predefined in the first SCS configuration and the second SCS configuration" comprises: the first SCS configuration is a larger value in the first SCS configuration and the second SCS configuration.

As one embodiment, the meaning of the above phrase "the first SCS configuration is predefined in the first SCS configuration and the second SCS configuration" comprises: the first SCS configuration is equal to 0.

Typically, a type of the first PUSCH is used for determining the target SCS configuration.

As one embodiment, the first PUSCH is associated simultaneously with the first SCS configuration and the second SCS configuration, and a type of the first PUSCH is used for determining the target SCS configuration from the first SCS configuration and the second SCS configuration.

As one embodiment, a type of the first PUSCH comprises a type of BWP to which frequency domain resources occupied by the first PUSCH belong.

As one sub-embodiment of this embodiment, a type of the BWP comprises one of downlink and uplink.

As one dependent embodiment of this sub-embodiment, a type of BWP to which frequency domain resources occupied by the first PUSCH belong is uplink, and the target SCS configuration is the first SCS configuration; and a type of BWP to which frequency domain resources occupied by the first PUSCH belong is downlink, and the target SCS configuration is the second SCS configuration.

As one embodiment, a type of the first PUSCH comprises a type of the time slot to which time domain resources occupied by the first PUSCH belong.

As one sub-embodiment of this embodiment, a type of the time slot to which time domain resources occupied by the first PUSCH belong is uplink, and the target SCS configuration is the first SCS configuration; and a type of the time slot to which time domain resources occupied by the first PUSCH belong is not uplink, and the target SCS configuration is the second SCS configuration.

As one dependent embodiment of the sub-embodiment, the meaning of "a type of the time slot to which time domain resources occupied by the first PUSCH belong is not uplink" comprises: a type of the time slot to which time domain resources occupied by the first PUSCH belong is downlink.

As one dependent embodiment of the sub-embodiment, the meaning of "a type of the time slot to which time domain resources occupied by the first PUSCH belong is not uplink" comprises: a type of the time slot to which time domain resources occupied by the first PUSCH belong is flexible.

As one embodiment, a type of the first PUSCH comprises a priority corresponding to the first PUSCH.

As one sub-embodiment of this embodiment, a priority corresponding to the first PUSCH is a first priority, and the target SCS configuration is the first SCS configuration; a priority corresponding to the first PUSCH is a second priority, and the target SCS configuration is the second SCS configuration; and the first priority and the second priority are different.

Typically, a type of the first PUSCH comprises at least one of the following:
- a type of BWP where the first PUSCH is located;
- whether the first PUSCH carries UCI;
- a type of the UCI carried by the first PUSCH; and
- a scheduling method of the first PUSCH.

As one embodiment, a type of the first PUSCH comprises a type of BWP where the first PUSCH is located.

As one sub-embodiment of this embodiment, a type of BWP where the first PUSCH is located is UL BWP, and the target SCS configuration is the first SCS configuration; and alternatively, a type of BWP where the first PUSCH is located is DL BWP, and the target SCS configuration is the second SCS configuration.

As one sub-embodiment of this embodiment, a type of BWP where the first PUSCH is located is UL BWP, and the target SCS configuration is the first SCS configuration; and alternatively, a type of BWP where the first PUSCH is located is flexible BWP, and the target SCS configuration is the second SCS configuration.

As one embodiment, a type of the first PUSCH comprises: whether the first PUSCH carries UCI.

As one sub-embodiment of this embodiment, the first PUSCH carries UCI, and the target SCS configuration is the first SCS configuration; and alternatively, the first PUSCH does not carry UCI, and the target SCS configuration is the second SCS configuration.

As one sub-embodiment of this embodiment, the first PUSCH carries UCI, and the target SCS configuration is the second SCS configuration; and alternatively, the first PUSCH does not carry UCI, and the target SCS configuration is the first SCS configuration.

As one embodiment, a type of the first PUSCH comprises a type of UCI carried by the first PUSCH.

As one sub-embodiment of this embodiment, UCI carried by the first PUSCH comprises HARQ feedback, and the target SCS configuration is the first SCS configuration; and alternatively, UCI carried by the first PUSCH does not comprise HARQ feedback, and the target SCS configuration is the second SCS configuration.

As one sub-embodiment of this embodiment, UCI carried by the first PUSCH comprises HARQ feedback, and the target SCS configuration is the second SCS configuration; and alternatively, UCI carried by the first PUSCH does not comprise HARQ feedback, and the target SCS configuration is the first SCS configuration.

As one embodiment, a type of the first PUSCH comprises a scheduling method of the first PUSCH.

As one sub-embodiment of this embodiment, a scheduling method of the first PUSCH is dynamic scheduling, and the target SCS configuration is the first SCS configuration; and alternatively, a scheduling method of the first PUSCH is configured grant, and the target SCS configuration is the second SCS configuration.

As one sub-embodiment of this embodiment, a scheduling method of the first PUSCH is dynamic scheduling, and the target SCS configuration is the second SCS configuration; and alternatively, a scheduling method of the first PUSCH is configured grant, and the target SCS configuration is the first SCS configuration.

### Embodiment 6

Embodiment 6 illustrates a transmission flowchart of first DCI of one embodiment, as shown in FIG. 6. As shown in FIG. 6. In FIG. 6, communication is performed between the first node U3 and the second node N4 through a wireless link. It is particularly noted that the order in the present embodiment does not limit the order of signal transmission and the order of implementation in the present application. In case of no conflict, the embodiments, sub-embodiments and dependent embodiments in Embodiment 6 can be applied to the embodiments, sub-embodiments and dependent embodiments in Embodiment 5 in the present application; On the contrary, independent embodiment case of no conflict, the embodiments, sub-embodiments and s in Embodiment 5 in the present application can be applied to Embodiment 6.

For **the first node U3,** in step S30, first DCI is received.

For **the second node N4,** in step S40, first DCI is transmitted.

In Embodiment 6, the first DCI is used for scheduling the first PUSCH, the first DCI corresponds to a third SCS configuration, transmission of the first PUSCH depends on both the target SCS configuration and the third SCS configuration, and the third SCS configuration corresponds to the subcarrier spacing adopted by the first DCI.

As one embodiment, the first DCI is used for indicating time domain resources occupied by the first PUSCH.

As one embodiment, the first DCI and the first information block set are collectively used for indicating time domain resources occupied by the first PUSCH.

As one embodiment, the first DCI is used for indicating frequency domain resources occupied by the first PUSCH.

As one embodiment, the first DCI and the first information block set are collectively used for indicating frequency domain resources occupied by the first PUSCH.

As one embodiment, the first DCI is used for indicating MCS adopted by the first PUSCH.

As one embodiment, the first DCI and the first information block set are collectively used for indicating MCS adopted by the first PUSCH.

As one embodiment, the target SCS configuration and the third SCS configuration are collectively used for determining a time slot occupied by the first PUSCH.

As one embodiment, the first DCI is located in a time slot n, the first PUSCH is located in the second time slot, a time slot number of the second time slot is linearly correlated with W₁, the W₁ is the maximum positive integer not greater than W₂, the W₂ is equal to the product of n and a target parameter, the target parameter is equal to the quotient of a first parameter divided by a second parameter, the first parameter is equal to the Q₁ power of 2, the second parameter is equal to the Q₂ power of 2, the Q₁ is equal to a µ corresponding to the target SCS configuration, and the Q₂ is equal to the µ corresponding to the third SCS configuration.

As one embodiment, the subcarrier spacing adopted by the first DCI is equal to 15 KHz, and the third SCS configuration is equal to 0.

As one embodiment, the subcarrier spacing adopted by the first DCI is equal to 30KHz, and the third SCS configuration is equal to 1.

As one embodiment, the subcarrier spacing adopted by the first DCI is equal to 60KHz, and the third SCS configuration is equal to 2.

As one embodiment, the subcarrier spacing adopted by the first DCI is equal to 120KHz, and the third SCS configuration is equal to 3.

As one embodiment, the subcarrier spacing adopted by the first DCI is equal to 240KHz, and the third SCS configuration is equal to 4.

As one embodiment, the third SCS configuration is equal to one of 0, 1, 2, 3, 4.

As one embodiment, the third SCS configuration is equal to a non-negative integer.

As one embodiment, the first DCI comprises a first field, and interpretation of the first field depends on the target SCS configuration.

As one sub-embodiment of this embodiment, the first field included in the first DCI is used for indicating time domain resources occupied by the first PUSCH.

As one sub-embodiment of this embodiment, the first field included in the first DCI is a TDRA (Time domain resource assignment) field.

As one sub-embodiment of this embodiment, the first field included in the first DCI is used for indicating frequency domain resources occupied by the first PUSCH.

As one sub-embodiment of this embodiment, the first field included in the first DCI is an FDRA (Frequency domain resource assignment) field.

As one sub-embodiment of this embodiment, the first field included in the first DCI is a TCI field.

As one embodiment, the step S30 is located after step S10 and before step S11 in Embodiment 5.

As one embodiment, the step S40 is after step S20 and before step S21 in Embodiment 5.

### Embodiment 7

Embodiment 7 illustrates a schematic diagram of a first SCS configuration of one embodiment, as shown in FIG. 7. In FIG. 7, a SCS configuration corresponding to the first BWP is a first SCS configuration; and a SCS configuration corresponding to the second BWP is a second SCS configuration.

As one embodiment, the first BWP is an uplink BWP.

As one embodiment, the second BWP is a downlink BWP.

As one embodiment, the second BWP is a flexibly configured BWP.

As one sub-embodiment of this embodiment, the flexibly configured BWP refers to a BWP that can be used for both uplink transmission and downlink transmission.

As one sub-embodiment of this embodiment, the flexibly configured BWP refers to a BWP that comprises at least two RB sets used for uplink transmission and downlink transmission, respectively.

As one embodiment, the first PUSCH is transmitted in the first BWP.

As one embodiment, the first PUSCH is transmitted in the second BWP.

As one sub-embodiment of this embodiment, when the first PUSCH is transmitted in the second BWP, the first PUSCH still depends on the first information block set.

As one embodiment, the first PUSCH simultaneously occupies part of frequency domain resources in the first BWP and part of frequency domain resources in the second BWP.

As one sub-embodiment of this embodiment, the first PUSCH still depends on the first information block set.

### Embodiment 8

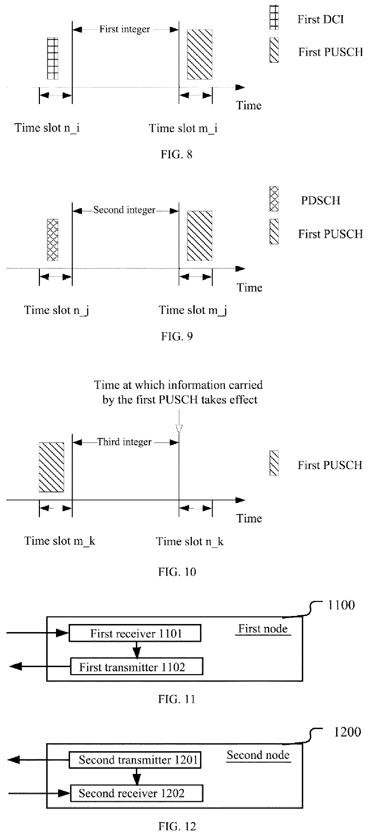

Embodiment 8 illustrates a schematic diagram of a relationship between the first PUSCH and the target SCS according to one embodiment of the present application, as shown in FIG. 8. In FIG. 8, the first node receives the first DCI in a time slot n_i, the first DCI is used for scheduling the first PUSCH, the first PUSCH is transmitted in a time slot m_i, the n_i and m_i are both non-negative integers, and the m_i is equal to the sum of the n_i and a first integer.

As one embodiment, the target SCS is used for determining a value of the first integer.

As one embodiment, a SCS configuration adopted by the first DCI is used for determining a value of the first integer.

As one embodiment, K₂ indicated by the first DCI is used for determining a value of the first integer.

As one embodiment, a value of n_i is used for determining a value of the first integer.

As one embodiment, a pusch-TimeDomainAllocation field in PUSCH-Config IE and the target SCS configuration are collectively used for determining a value of the first integer.

### Embodiment 9

Embodiment 9 illustrates a schematic diagram of a relationship between the first PUSCH and the target SCS according to another embodiment of the present application, as shown in FIG. 9. In FIG. 9, the first node receives a PDSCH (Physical Downlink Shared Channel) in a time slot n_j, the first PUSCH is transmitted in a time slot m_j, the first PUSCH carries HARQ information of the PDSCH, the n_j and the m_j are both non-negative integers, and the m_j is equal to the sum of the n_j and a second integer.

As one embodiment, a target SCS is used for determining a value of the second integer.

As one embodiment, a dl-DataToUL-ACK field in PUCCH-Config IE and the target SCS are collectively used for determining a value of the second integer.

As one embodiment, a value of m_j is used for determining a value of the second integer.

### Embodiment 10

Embodiment 10 illustrates a schematic diagram of a relationship between the first PUSCH and the target SCS according to another embodiment of the present application, as shown in FIG. 10. In FIG. 10, the first node transmits a first PUSCH in a time slot m_k, information carried by the first PUSCH takes effect in a time slot n_k, the n_k and the m_k are both non-negative integers, and the n_k is equal to the sum of the m_k and a third integer.

As one embodiment, a target SCS is used for determining a value of the third integer.

As one embodiment, information carried by the first PUSCH comprises TCI.

As one embodiment, information carried by the first PUSCH comprises BLF (Beam Link Failure).

As one embodiment, a value of the m_k is used for determining a value of the third integer.

As one embodiment, information carried by the first PUSCH is used for updating TCI of CORESET (Control Resource Set).

As one embodiment, information carried by the first PUSCH is used for switching PCI (Physical Cell Identity).

As one embodiment, information carried by the first PUSCH is used for inter-cell handover.

As one embodiment, information carried by the first PUSCH is used for mobility management.

As one embodiment, information carried by the first PUSCH is used for beam management.

As one embodiment, information carried by the first PUSCH is used for TRP handover.

### Embodiment 11

Embodiment 11 illustrates a structural block diagram in one first node, as shown in FIG. 11. In FIG. 11, the first node 1100 comprises a first receiver 1101 and a first transmitter 1102.

The first receiver 1101 receives a first information block set, the first information block set being used for configuring a first BWP, the first information block set comprising a BWP information unit, the BWP information unit being used for determining a first SCS configuration.

The first transmitter 1102 transmits a first PUSCH.

In Embodiment 11, the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

As one embodiment, the meaning of the first PUSCH depending on the target SCS configuration comprises at least one of the following:
- the first PUSCH adopts subcarrier spacing to which the target SCS configuration corresponds;
- the target SCS configuration is used for determining time domain resources occupied by the first PUSCH;
- the target SCS configuration is used for determining time domain resources occupied by signals associated with information carried by the first PUSCH; and
- the target SCS configuration is used for determining the time at which the information carried by the first PUSCH takes effect.

As one embodiment, the target SCS configuration is the first SCS configuration in the first SCS configuration and the second SCS configuration, the first SCS configuration being configurable.

As one embodiment, the target SCS configuration is the first SCS configuration in the first SCS configuration and the second SCS configuration, the first SCS configuration being predefined in the first SCS configuration and the second SCS configuration.

As one embodiment, a type of the first PUSCH is used for determining the target SCS configuration.

As one embodiment, a type of the first PUSCH comprises at least one of the following:
- a type of BWP where the first PUSCH is located;
- whether the first PUSCH carries UCI;
- a type of the UCI carried by the first PUSCH; and
- a scheduling method of the first PUSCH.

As one embodiment, it is characterized by comprising:
a first receiver 1101 for receiving first DCI,
wherein, the first DCI is used for scheduling the first PUSCH, the first DCI corresponds to a third SCS configuration, transmission of the first PUSCH depends on both the target SCS configuration and the third SCS configuration, and the third SCS configuration corresponds to subcarrier spacing adopted by the first DCI.

As one embodiment, the first receiver 1101 comprises at least the first four of an antenna 452, a receiver 454, a multi-antenna receiving processor 458, a receiving processor 456, and a controller/processor 459 in Embodiment 4.

As one embodiment, the first transmitter 1102 comprises at least the first four of an antenna 452, a transmitting device 454, a multi-antenna transmitting processor 457, a transmitting processor 468, and a controller/processor 459 in Embodiment 4.

### Embodiment 12

Embodiment 12 illustrates a structural block diagram in one second node, as shown in FIG. 12. In FIG. 12, the second node 1200 comprises a second transmitter 1201 and a second receiver 1202.

The second transmitter 1201 transmits a first information block set, the first information block set being used for configuring a first BWP, the first information block set comprising a BWP information unit, the BWP information unit being used for determining a first SCS configuration.

The second receiver 1202 receives a first PUSCH.

In Embodiment 12, the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

As one embodiment, the meaning of the first PUSCH depending on the target SCS configuration comprises at least one of the following:
- the first PUSCH adopts subcarrier spacing to which the target SCS configuration corresponds;
- the target SCS configuration is used for determining time domain resources occupied by the first PUSCH;
- the target SCS configuration is used for determining time domain resources occupied by signals associated with information carried by the first PUSCH; and
- the target SCS configuration is used for determining the time at which the information carried by the first PUSCH takes effect.

As one embodiment, the target SCS configuration is the first SCS configuration in the first SCS configuration and the second SCS configuration, the first SCS configuration being configurable.

As one embodiment, the target SCS configuration is the first SCS configuration in the first SCS configuration and the second SCS configuration, the first SCS configuration being predefined in the first SCS configuration and the second SCS configuration.

As one embodiment, a type of the first PUSCH is used for determining the target SCS configuration.

As one embodiment, a type of the first PUSCH comprises at least one of the following:
- a type of BWP where the first PUSCH is located;
- whether the first PUSCH carries UCI;
- a type of the UCI carried by the first PUSCH; and
- a scheduling method of the first PUSCH.

As one embodiment, it is characterized by comprising:
a second transmitter 1201 for transmitting first DCI,
wherein, the first DCI is used for scheduling the first PUSCH, the first DCI corresponds to a third SCS configuration, transmission of the first PUSCH depends on both the target SCS configuration and the third SCS configuration, and the third SCS configuration corresponds to subcarrier spacing adopted by the first DCI.

As one embodiment, the second transmitter 1201 comprises at least the first four of an antenna 420, a transmitting device 418, a multi-antenna transmitting processor 471, a transmitting processor 416, and a controller/processor 475 in Embodiment 4.

As one embodiment, the second receiver 1202 comprises at least the first four of an antenna 420, a receiving device 418, a multi-antenna receiving processor 472, a receiving processor 470, and a controller/processor 475 in Embodiment 4.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk, etc. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. The first node in the present application includes but is not limited to mobile phones, tablet computers, laptops, data cards, low-power devices, eMTC devices, NB-IoT devices, vehicular communication devices, transportation vehicles, motor vehicles, RSUs, aircrafts, airplanes, drones, remote-controlled aircrafts, and other wireless communication devices. The second node in the present application includes but is not limited to macro cellular base stations, micro cellular base stations, small cellular base stations, home base stations, relay base stations, eNBs, gNBs, transmission and reception nodes TRP, GNSS, relay satellites, satellite base stations, air base stations, RSUs, drones, testing devices, such as transceiver apparatuses or signaling test instruments that simulate partial base station functions, and other wireless communication devices.

Those skilled in the art will appreciate that the present invention may be practiced in other designated forms without departing from its core or basic features. Therefore, the currently disclosed embodiments should be regarded as descriptive and not restrictive in any way. The scope of the present invention is determined by the appended claims rather than the foregoing description, and all modifications within their equivalent meanings and areas are considered to have been included therein.

## Claims

1. A first node for use in wireless communication, comprising:
a first receiver for receiving a first information block set, the first information block set being used for configuring a first BWP, the first information block set comprising a BWP information unit, the BWP information unit being used for determining a first SCS configuration; and
a first transmitter for transmitting a first PUSCH,
wherein, the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

2. The first node according to claim 1, wherein the meaning of the first PUSCH depending on the target SCS configuration comprises at least one of the following:
- the first PUSCH adopts subcarrier spacing to which the target SCS configuration corresponds;
- the target SCS configuration is used for determining time domain resources occupied by the first PUSCH;
- the target SCS configuration is used for determining time domain resources occupied by signals associated with information carried by the first PUSCH; and
- the target SCS configuration is used for determining time at which the information carried by the first PUSCH takes effect.

3. The first node according to claim 1 or 2, wherein the target SCS configuration is the first SCS configuration in the first SCS configuration and the second SCS configuration, the first SCS configuration being configurable.

4. The first node according to claim 1 or 2, wherein the target SCS configuration is the first SCS configuration in the first SCS configuration and the second SCS configuration, the first SCS configuration being predefined in the first SCS configuration and the second SCS configuration.

5. The first node according to claim 1 or 2, wherein a type of the first PUSCH is used for determining the target SCS configuration.

6. The first node according to claim 5, wherein the type of the first PUSCH comprises at least one of the following:
- a type of BWP where the first PUSCH is located;
- whether the first PUSCH carries UCI;
- a type of the UCI carried by the first PUSCH; and
- a scheduling method of the first PUSCH.

7. The first node according to any one of claim 1 to 6, comprising:
the first receiver for receiving first DCI,
wherein, the first DCI is used for scheduling the first PUSCH, the first DCI corresponds to a third SCS configuration, transmission of the first PUSCH depends on both the target SCS configuration and the third SCS configuration, and the third SCS configuration corresponds to subcarrier spacing adopted by the first DCI.

8. A second node for use in wireless communication, comprising:
a second transmitter for transmitting a first information block set, the first information block set being used for configuring a first BWP, the first information block set comprising a BWP information unit, the BWP information unit being used for determining a first SCS configuration; and
a second receiver for receiving the first PUSCH,
wherein, the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

9. The second node according to claim 8, wherein the meaning of the first PUSCH depending on the target SCS configuration comprises at least one of the following:
- the first PUSCH adopts subcarrier spacing to which the target SCS configuration corresponds;
- the target SCS configuration is used for determining time domain resources occupied by the first PUSCH;
- the target SCS configuration is used for determining time domain resources occupied by signals associated with information carried by the first PUSCH; and
- the target SCS configuration is used for determining time at which the information carried by the first PUSCH takes effect.

10. The second node according to claim 8 or 9, wherein the target SCS configuration is the first SCS configuration in the first SCS configuration and the second SCS configuration, the first SCS configuration being configurable.

11. The second node according to claim 8 or 9, wherein the target SCS configuration is the first SCS configuration in the first SCS configuration and the second SCS configuration, the first SCS configuration being predefined in the first SCS configuration and the second SCS configuration.

12. The second node according to claim 8 or 9, wherein a type of the first PUSCH is used for determining the target SCS configuration.

13. The second node according to claim 12, wherein the type of the first PUSCH comprises at least one of the following:
- a type of BWP where the first PUSCH is located;
- whether the first PUSCH carries UCI;
- a type of the UCI carried by the first PUSCH; and
- a scheduling method of the first PUSCH.

14. The second node according to any one of claims 8 to 13, comprising:
the second transmitter for transmitting first DCI,
wherein, the first DCI is used for scheduling the first PUSCH, the first DCI corresponds to a third SCS configuration, transmission of the first PUSCH depends on both the target SCS configuration and the third SCS configuration, and the third SCS configuration corresponds to subcarrier spacing adopted by the first DCI.

15. A method for use in a first node in wireless communication, comprising:
receiving a first information block set, the first information block set being used for configuring a first BWP, the first information block set comprising a BWP information unit, the BWP information unit being used for determining a first SCS configuration; and
transmitting a first PUSCH,
wherein, the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

16. The method in the first node according to claim 15, wherein the meaning of the first PUSCH depending on the target SCS configuration comprises at least one of the following:
- the first PUSCH adopts subcarrier spacing to which the target SCS configuration corresponds;
- the target SCS configuration is used for determining time domain resources occupied by the first PUSCH;
- the target SCS configuration is used for determining time domain resources occupied by signals associated with information carried by the first PUSCH; and
- the target SCS configuration is used for determining time at which the information carried by the first PUSCH takes effect.

17. The method in the first node according to claim 15 or 16, wherein the target SCS configuration is the first SCS configuration in the first SCS configuration and the second SCS configuration, the first SCS configuration being configurable.

18. The method in the first node according to claim 15 or 16, wherein the target SCS configuration is the first SCS configuration in the first SCS configuration and the second SCS configuration, the first SCS configuration being predefined in the first SCS configuration and the second SCS configuration.

19. The method in the first node according to claim 15 or 16, wherein a type of the first PUSCH is used for determining the target SCS configuration.

20. The method in the first node according to claim 19, wherein the type of the first PUSCH comprises at least one of the following:
- a type of BWP where the first PUSCH is located;
- whether the first PUSCH carries UCI (Uplink Control Information);
- a type of the UCI carried by the first PUSCH; and
- a scheduling method of the first PUSCH.

21. The method in the first node according to any one of claims 15 to 20, comprising:
receiving first DCI,
wherein, the first DCI is used for scheduling the first PUSCH, the first DCI corresponds to a third SCS configuration, transmission of the first PUSCH depends on both the target SCS configuration and the third SCS configuration, and the third SCS configuration corresponds to subcarrier spacing adopted by the first DCI.

22. A method for use in a second node for wireless communication, comprising:
transmitting a first information block set, the first information block set being used for configuring a first BWP, the first information block set comprising a BWP information unit, the BWP information unit being used for determining a first SCS configuration; and
receiving a first PUSCH,
wherein, the first PUSCH depends on the first information block set, the first PUSCH depends on a target SCS configuration, candidates of the target SCS configuration comprise the first SCS configuration and a second SCS configuration, and the second SCS configuration is different from the first SCS configuration.

23. The method in the second node according to claim 22, wherein the meaning of the first PUSCH depending on the target SCS configuration comprises at least one of the following:
- the first PUSCH adopts subcarrier spacing to which the target SCS configuration corresponds;
- the target SCS configuration is used for determining time domain resources occupied by the first PUSCH;
- the target SCS configuration is used for determining time domain resources occupied by signals associated with information carried by the first PUSCH; and
- the target SCS configuration is used for determining time at which the information carried by the first PUSCH takes effect.

24. The method in the second node according to claim 22 or 23, wherein the target SCS configuration is the first SCS configuration in the first SCS configuration and the second SCS configuration, the first SCS configuration being configurable.

25. The method in the second node according to claim 22 or 23, wherein the target SCS configuration is the first SCS configuration in the first SCS configuration and the second SCS configuration, the first SCS configuration being predefined in the first SCS configuration and the second SCS configuration.

26. The method in the second node according to claim 22 or 23, wherein a type of the first PUSCH is used for determining the target SCS configuration.

27. The method in the second node according to claim 26, wherein the type of the first PUSCH comprises at least one of the following:
- a type of BWP where the first PUSCH is located;
- whether the first PUSCH carries UCI;
- a type of the UCI carried by the first PUSCH; and
- a scheduling method of the first PUSCH.

28. The method in the second node according to any one of claims 22 to 27, comprising:
transmitting first DCI,
wherein, the first DCI is used for scheduling the first PUSCH, the first DCI corresponds to a third SCS configuration, transmission of the first PUSCH depends on both the target SCS configuration and the third SCS configuration, and the third SCS configuration corresponds to subcarrier spacing adopted by the first DCI.
